# EUROPEAN PATENT APPLICATION

(11) **EP 1 927 879 A2**
(43) Date of publication of application: **04.06.2008**
(21) Application number: 07121631.1
(22) Date of filing: 27.11.2007
(51) Int. Cl.: G02B 26/10

(54) **Two-dimensional micro optical scanner**

(30) Priority: 01.12.2006 KR 20060120977
(71) Applicant: Samsung Electronics Co., Ltd., Suwon-si Gyeonggi-do 443-742 (KR)
(72) Inventor: Park, Yong-hwa c/o Samsung Advanced Institute of Technology,, Gyeonggi-do (KR); Cho, Jin-woo c/o Samsung Advanced Institute of Technology,, Gyeonggi-do (KR)
(74) Representative: Anderson, James Edward George

(57) **Abstract**

A two-dimensional micro optical scanner is provided. The two-dimensional micro optical scanner includes a first scanner with a first mirror pivoted in a first direction; a second scanner with a second mirror pivoted in a second direction; and an optical path changing member with a curved mirror. The optical path changing member directs light scanned by the first scanner to the second scanner.

## Description

### BACKGROUND OF THE INVENTION

Apparatuses consistent with the present invention relate to a micro optical scanner, and more particularly, to a two-dimensional micro optical scanner that scans light in two dimensions by pivoting two mirrors in different directions.

Micro optical scanners are widely used in displays, printers, measurement systems, and precision machining using optical scanning. Micro optical scanners include a mirror that reflects light using micro-electro-mechanical system (MEMS) technology, a support axis that supports the mirror, and driving means for pivoting the reflecting mirror.

Two-dimensional micro optical scanners, which scan light in two dimensions, pivot a single mirror in vertical and horizontal directions. Such two-dimensional micro optical scanners can be miniaturized, but disadvantageously there is coupling between the horizontal and vertical motions of the mirror, thereby making it difficult to achieve precise control, high speed driving, a wide driving angle, and high resolution.

Two-dimensional micro optical scanners may include two mirrors, that is, a horizontal mirror and a vertical mirror, which are pivoted in horizontal and vertical directions, respectively. Coupling between the horizontal and vertical motions of the mirrors can be avoided in this case, but since light emitted in a horizontal direction must also be emitted in a vertical direction, the vertical mirror is large. Also, since the inertia of the vertical mirror is high, a high driving voltage is required. Furthermore, the risk that a support axis of the vertical mirror may be damaged by external impact is high.

### SUMMARY OF THE INVENTION

According to an aspect of the present invention, there is provided a two-dimensional micro optical scanner including a first scanner with a first mirror pivoted in a first direction; a second scanner with a second mirror pivoted in a second direction; and an optical path changing member with a curved mirror. The optical path changing member directs light scanned by the first scanner to the second scanner.

The curved mirror may reduce the scan angle of light scanned by the first scanner and direct the light to the second mirror.

The curved mirror may focus light scanned by the first scanner on the second mirror. The curved mirror may be a cylindrical mirror. The central axis of the cylindrical mirror may coincide with the pivot of the first mirror.

According to another aspect of the present invention, there is provided a two-dimensional micro optical scanner including first and second mirrors formed on the same substrate and pivoted in different directions, and a curved mirror that reduces the scan angle of light scanned by the first mirror and directs the light to the second mirror.

The curved mirror may be a cylindrical mirror that focuses light scanned by the first scanner on the second mirror.

The central axis of the cylindrical mirror may coincide with the pivot of the first mirror.

Exemplary embodiments of the present invention may thus solve the above problems and other problems not described above.

Exemplary embodiments of the present invention may thus provide a small and reliable two-dimensional micro optical scanner.

### BRIEF DESCRIPTION OF THE DRAWINGS

The above and other aspects of the present invention will become more apparent by describing in detail exemplary embodiments thereof with reference to the attached drawings in which:
FIG. 1 is a perspective view of a two-dimensional micro optical scanner according to an exemplary embodiment of the present invention;
FIG. 2 is a plan view illustrating structures for pivoting mirrors;
FIG. 3 is a cross-sectional view taken along line A-A' of FIG. 2;
FIGS. 4A and 4B are respectively a stereoscopic view and a plan view illustrating simulation results of optical paths after employing a plane mirror;
FIGS. 5A and 5B are respectively a stereoscopic view and a plan view illustrating simulation results of optical paths after employing a cylindrical mirror as a curved mirror;
FIG. 6 illustrates plan views for comparing the sizes of micro optical scanners when a plane mirror is employed and when a curved mirror is employed; and
FIG. 7 illustrates a distorted image and a corrected image on a screen.

### DETAILED DESCRIPTION OF EXEMPLARY EMBODIMENTS OF THE INVENTION

The present invention will now be described more fully with reference to the accompanying drawings, in which exemplary embodiments of the invention are shown.

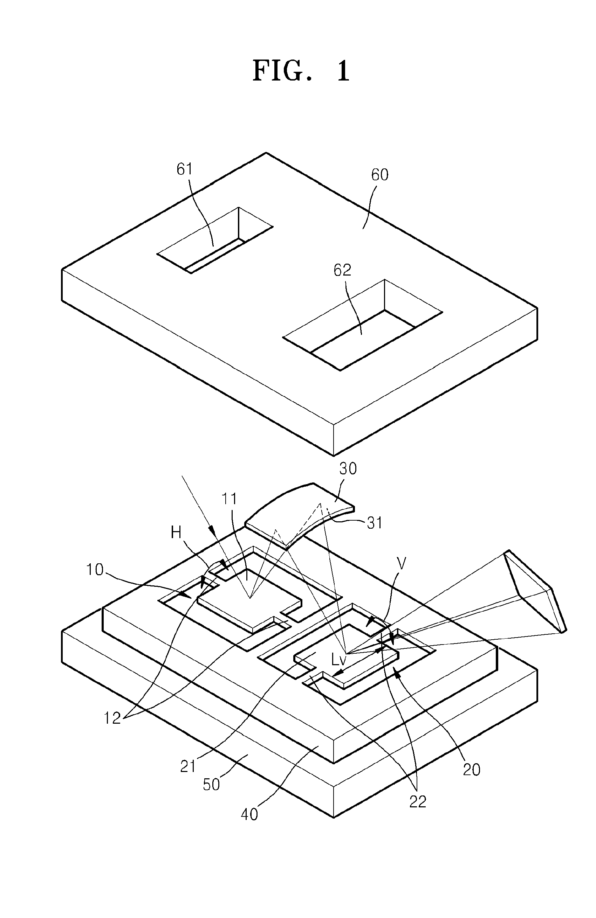

FIG. 1 is a perspective view of a two-dimensional micro optical scanner according to an exemplary embodiment of the present invention. Referring to FIG. 1, a first scanner 10 includes a first mirror 11 and a first support axis 12. A second scanner 20 includes a second mirror 21 and a second support axis 22. The first mirror 11 is pivoted in a first direction H about the first support axis 12, and the second mirror 21 is pivoted in a second direction V about the second support axis 22. An optical path changing member 30 directs light reflected by the first mirror 21 to the second mirror 21. First and second windows 61 and 62 are formed in an upper cover 60. For example, light L introduced through the first window 61 may be horizontally scanned by the first scanner 10, incident on the second scanner 20 by the optical path changing member 30, vertically scanned by the second scanner 20, and discharged through the second window 62.

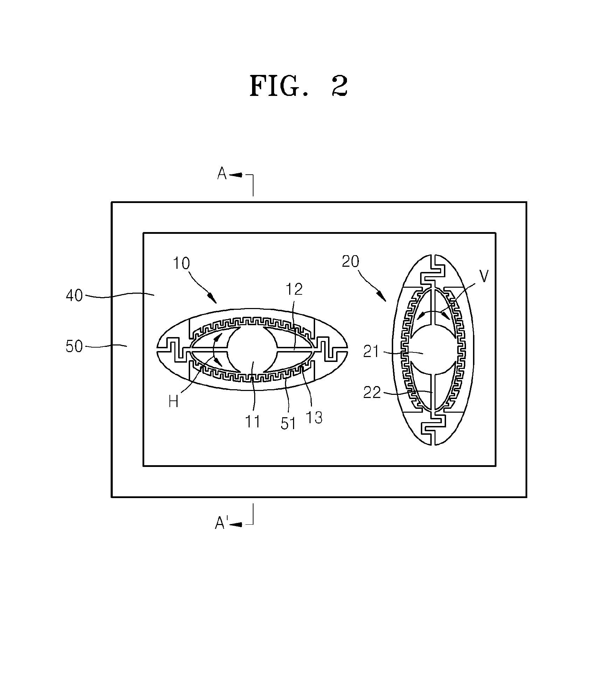

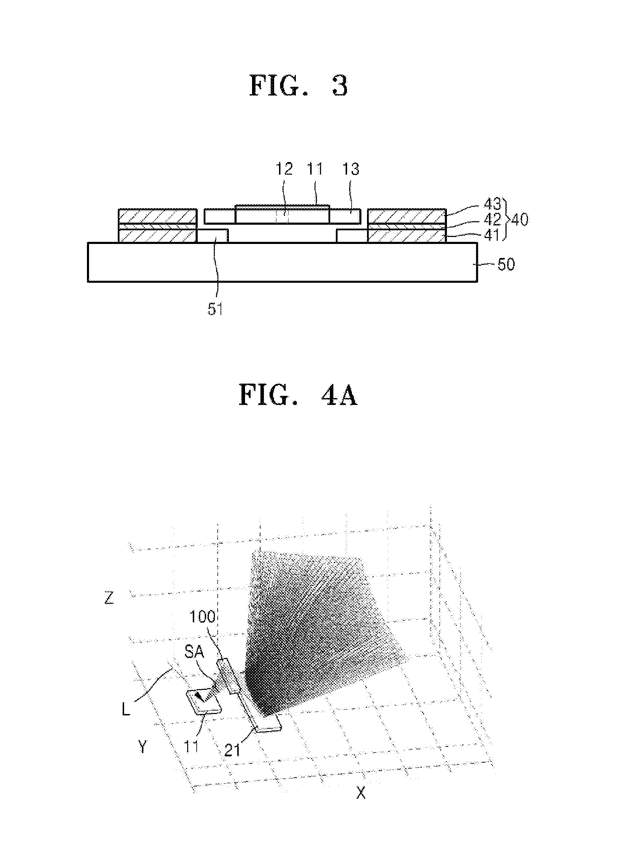

FIG. 2 is a plan view illustrating structures for pivoting the first mirror 11 and the second mirror 21. FIG. 3 is a cross-sectional view taken along line A-A' of FIG. 2. An example in which the first mirror 11 is pivoted using an electrostatic force will now be explained.

Referring to FIGS. 1, 2, and 3, a frame 40 includes a first conductive layer 41, an insulating layer 42, and a second conductive layer 43, which are sequentially stacked on a substrate 50. The first mirror 11, the first support axis 12, and a plurality of driving electrodes 13 are formed using the second conductive layer 43. For example, the second conductive layer 43 may be etched into a predetermined shape to form the first mirror 11, the first support axis 12, and the plurality of driving electrodes 13, as shown in FIG. 2. Accordingly, the first mirror 11 is supported on the frame 40 by the first support axis 12. A plurality of fixed electrodes 51 are formed using the first conductive layer 41. For example, the first conductive layer 41 may be etched into a predetermined shape to form the plurality of fixed electrodes 51 that alternate with the plurality of driving electrodes 13.

A driving voltage is applied to the plurality of fixed electrodes 51 through the first conductive layer 41. A driving voltage is applied to the plurality of driving electrodes 13 through the second conductive layer 43 and the first support axis 12. For example, a direct current (DC) driving voltage may be applied to the plurality of driving electrodes 13, and an alternating current (AC) driving voltage may be applied to the plurality of fixed electrodes 51. Then, due to an electrostatic force between the plurality of fixed electrodes 51 and the plurality of driving electrodes 13, the first mirror 11 seesaws at a high frequency of several kHz to several tens of kHz. The first support axis 12 acts as the pivot of the first mirror 11, and provides an elastic restoring force to the first mirror 11. In this structure, light can be horizontally scanned by pivoting the first mirror 11 in the first direction H.

A structure for pivoting the second mirror 21 is the same as the aforesaid structure. The present exemplary embodiment is not limited to the structures for pivoting the first mirror 11 and the second mirror 21. The first mirror 11 and the second mirror 21 may be pivoted by various other methods, such as a method using a piezoelectric element or an electromagnetic force.

Light incident on the first mirror 11 is horizontally scanned by the first mirror 11 that is pivoted in the first direction H. The optical path changing member 30 directs the horizontally scanned light to the second mirror 21. The horizontally scanned light is vertically scanned by the second mirror 21 that is pivoted in the second direction V, thereby realizing a two-dimensional optical scanner. The optical path changing member 30 includes a curved mirror 31 that reflects light emitted from the first scanner 10 to the second scanner 20. The optical path changing member 30 is disposed on the upper cover 60 of the chip-like two-dimensional micro optical scanner.

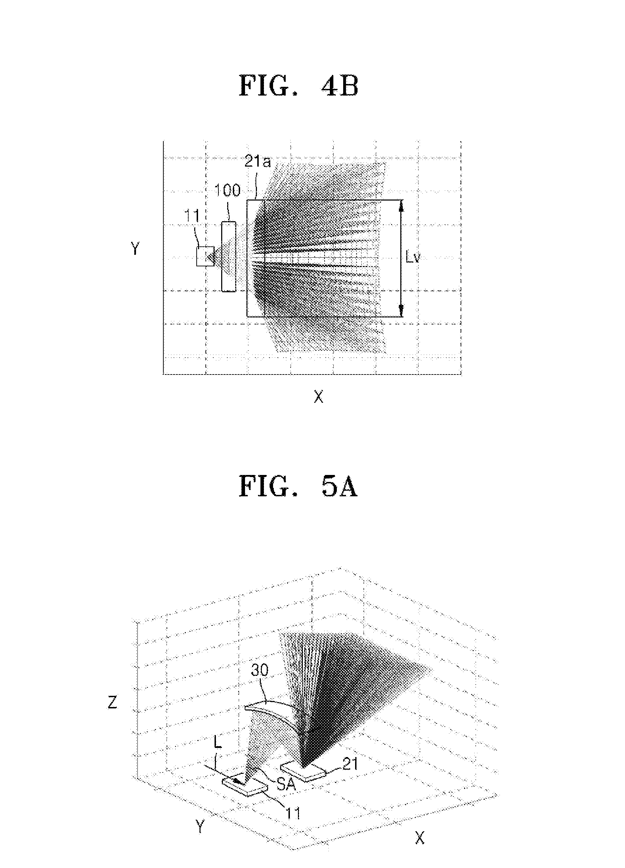

To reflect light emitted from the first scanner 10 to the second scanner 20, a plane mirror 100 (see FIG. 4A) having only a reflecting function may be employed instead of the curved mirror 31. FIGS. 4A and 4B are respectively a stereoscopic view and a plan view illustrating simulation results of optical paths after employing the plane mirror 100. Referring to FIGS. 4A and 4B, to vertically scan light horizontally scanned at a predetermined scan angle SA by the first mirror 11, a second mirror 21 a should have a predetermined length Lv. The length Lv should increase in proportion to the optical path length between the first mirror 11 and the second mirror 21 a and the scan angle SA.

The two-dimensional micro optical scanner according to exemplary embodiments of the present embodiment employs the curved mirror 31. The curved mirror 31 reduces the scan angle SA of light scanned by the first mirror 11 and then directs the light to the second mirror 21. To this end, the curved mirror 31 may be a concave mirror that focuses light. When a concave mirror is employed as the curved mirror 31, the length of the second mirror 21 can be reduced. Accordingly, the weight of the second mirror 21 can be reduced, the risk that the second support axis 22 may be damaged by impact can be reduced, and the two-dimensional micro optical scanner can be driven at a low driving voltage. Also, since the inertia of the second mirror 21 decreases, high speed driving can be achieved. Since the length of the second mirror 21 is reduced, a wide driving angle can be achieved. Also, the chip-like two-dimensional micro optical scanner can be miniaturized. The two-dimensional micro optical scanner is manufactured using micro-electro-mechanical system (MEMS) technology. Since the number of chips per wafer increases, cost competitiveness can be improved.

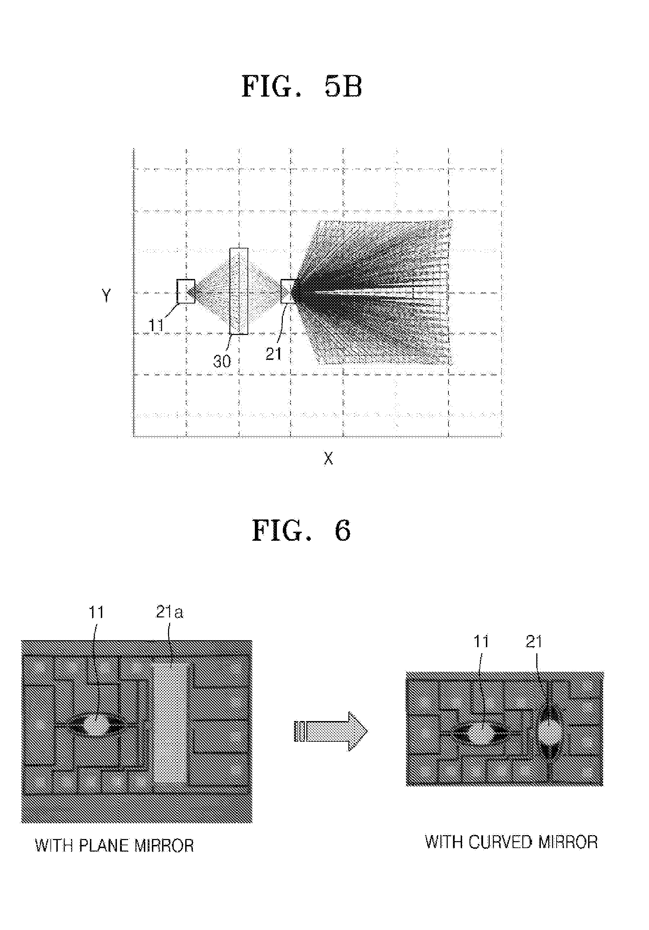

Preferably, but not necessarily, the curved mirror 31 may be a cylindrical mirror to focus light scanned by the first scanner 10 on the second mirror 21 of the second scanner 20. FIGS. 5A and 5B are respectively a stereoscopic view and a plan view illustrating simulation results of optical paths after employing the cylindrical mirror as the cured mirror 31. Referring to FIGS. 5A and 5B, light horizontally scanned at a predetermined scan angle SA by the first scanner 10 is focused on the second mirror 21 by the curved mirror 31. Accordingly, the size of the second mirror 21 may be almost the same as that of the first mirror 11.

The first mirror 11 and the second mirror 21 are disposed on the same plane. Accordingly, when a cylindrical mirror is employed as the curved mirror 31, the central axis of the curved mirror 31 may coincide with the pivot of the first mirror 11 to minimize the traveling distance of light.

FIG. 6 illustrates plan views for comparing the sizes of two-dimensional micro optical scanners when the plane mirror 100 is employed and the cylindrical mirror is employed as the curved mirror 31. Referring to FIG. 6, the two-dimensional micro optical scanner employing the cylindrical mirror as the curved mirror 31 is smaller than the two-dimensional micro optical scanner employing the plane mirror 100.

While the first scanner 10 and the second scanner 20 may be formed on the same substrate 50, the first scanner 10 and the second scanner 20 may be separately manufactured and then assembled with each other.

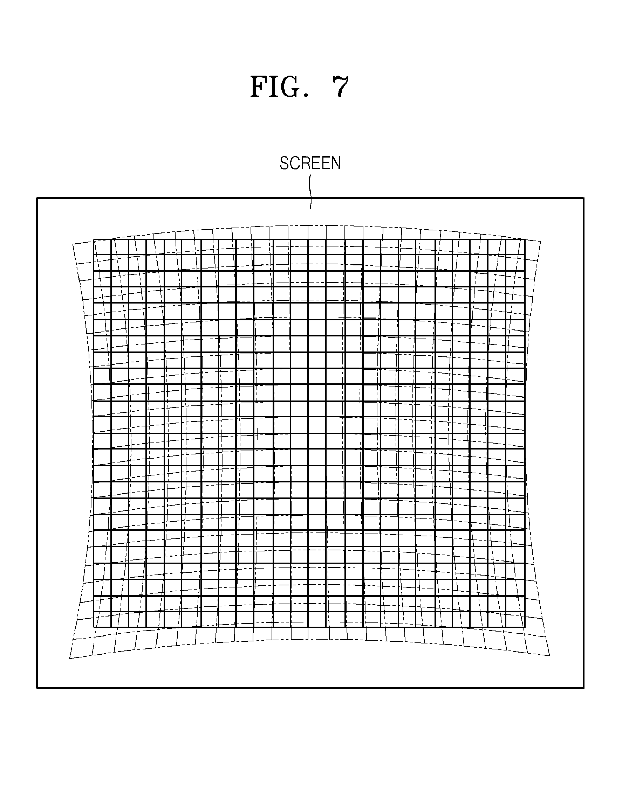

The curved mirror 31 can correct distortion of two-dimensionally scanned light. For example, referring to FIG. 7, an image projected onto a screen is distorted vertically and horizontally when the plane mirror 100 is employed, as indicated by dot-dot-dash lines. The curved mirror 31 may have a spherical or an aspheric surface to correct the distortion.

When the optical path changing member 30 with the curved mirror 31 is used, the two-dimensional micro optical scanner can be miniaturized, operate at a high speed with low power consumption, and have a wide driving angle. Since the optical means for image correction is included in the chip-like two-dimensional optical scanner package, the two-dimensional micro optical scanner can be more compact.

As described above, the two-dimensional micro optical scanner according to exemplary embodiments of the present invention has the following advantages.

First, the length of the second mirror can be reduced by reducing the scan angle of light scanned by the first scanner. Accordingly, the first and second scanner can have a wide driving angle, and the two-dimensional optical scanner can provide high resolution.

Second, since the inertia of the second mirror decreases, the second mirror can be driven at a high speed, the second mirror can be easily controlled, and power consumption for driving the second mirror can be reduced.

Third, since the inertia of the second mirror decreases, the risk that the support axis of the second mirror may be damaged by impact can be reduced, and the mechanical reliability of the optical scanner can be improved.

Fourth, since the number of chips per wafer in manufacturing the two-dimensional micro optical scanner increases, cost competitiveness can be improved.

Fifth, since the optical means for image correction is included in the chip-shaped two-dimensional micro optical scanner package, the two-dimensional micro optical scanner can be more compact.

While the present invention has been particularly shown and described with reference to exemplary embodiments thereof, it will be understood by those of ordinary skill in the art that various changes in form and details may be made therein without departing from the scope of the present invention as defined by the following claims and their legal equivalents.

## Claims

1. A two-dimensional micro optical scanner comprising:
a first scanner comprising a first mirror pivoted in a first direction;
a second scanner comprising a second mirror pivoted in a second direction; and
an optical path changing member comprising a curved mirror, wherein the optical path changing member is arranged to direct light scanned by the first scanner to the second scanner.

2. The two-dimensional micro optical scanner of claim 1, wherein the curved mirror is arranged to reduce a scan angle of the light scanned by the first scanner and directs the light to the second mirror.

3. The two-dimensional micro optical scanner of claim 1, wherein the curved mirror is arranged to focus the light scanned by the first scanner on the second mirror.

4. The two-dimensional micro optical scanner of claim 3, wherein the curved mirror is a cylindrical mirror.

5. The two-dimensional micro optical scanner of claim 4, wherein a central axis of the cylindrical mirror coincides with a pivot of the first mirror.

6. A two-dimensional micro optical scanner comprising:
first and second mirrors formed on a substrate and pivoted in different directions; and
a curved mirror arranged to reduce a scan angle of light scanned by the first mirror, and directs the light to the second mirror.

7. The two-dimensional micro optical scanner of claim 6, wherein the curved mirror is a cylindrical mirror arranged to focus the light scanned by the first scanner on the second mirror.

8. The two-dimensional micro optical scanner of claim 7, wherein a central axis of the cylindrical mirror coincides with a pivot of the first mirror.
